(19) Europäisches Patentamt
European Patent Office
Office européen des brevets

(11) **EP 2 700 923 B1**

(12) **EUROPEAN PATENT SPECIFICATION**

(45) Date of publication and mention
of the grant of the patent:
**21.06.2017 Bulletin 2017/25**

(51) Int Cl.:
*G01K 1/16* (2006.01)  *E21B 47/06* (2012.01)
*G01K 7/16* (2006.01)  *G01K 13/02* (2006.01)

(21) Application number: **12305802.6**

(22) Date of filing: **04.07.2012**

(54) **Apparatus for determining fluid characteristics**

Vorrichtung zur Bestimmung von Flüssigkeitseigenschaften

Appareil permettant de déterminer les caractéristiques de fluide

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.02.2014 Bulletin 2014/09**

(73) Proprietors:
• **Services Pétroliers Schlumberger
75007 Paris (FR)**
Designated Contracting States:
**FR**
• **Schlumberger Technology B.V.
2514 The Hague (NL)**
Designated Contracting States:
**AL BG CZ DE DK GR HU IE IT LT MK NO PL RO
SI SK SM TR**
• **Schlumberger Holdings Limited
Tortola (VG)**
Designated Contracting States:
**AL GB NL**
• **Prad Research Development Limited
Tortola (VG)**
Designated Contracting States:
**AT BE CH CY EE ES FI HR IS LI LU LV MC MT PT
RS SE**

(72) Inventors:
• moscato, tullio
**92142 clamart cedex (FR)**
• borisova, elena
**92142 clamart cedex (FR)**

(74) Representative: **Schlumberger Cambridge
Research Limited
Intellectual Property Law
High Cross
Madingley Road
Cambridge CB3 0EL (GB)**

(56) References cited:
**DE-B3-102010 003 967    FR-A1- 2 724 727
US-A- 2 245 700          US-A- 4 265 117
US-A- 4 811 598          US-A1- 2004 080 394**

**Description**

**FIELD OF THE DISCLOSURE**

This disclosure relates generally to downhole fluids and, more particularly, to methods and apparatus for determining fluid characteristics.

**BACKGROUND**

A resistance temperature detector (RTD) generally includes a wire made from a material that has a resistance that varies with a temperature of the material. Generally, the wire is coupled to a heat conductive substrate adhered to a pad by a thermally conductive adhesive, and the RTD is wrapped or enclosed in a protective packaging or shield. To determine a temperature of a fluid using the RTD, a current may be sent through the wire when the shield is immersed in the fluid. Based on the resistance of the wire, a temperature of the fluid may be determined. DE 10 2010 003 967 B3, US 4,265,117 and FR 2 724 727 disclose examples of temperature sensors.

**SUMMARY**

An embodiment apparatus disclosed herein includes a housing including an electrically insulting pane thermally insulated from the housing. The pane has an exterior surface to be disposed in a fluid and an interior surface to be isolated from the fluid. The pane comprises diamond. The embodiment apparatus also includes a sensor, which includes an electrical resistor coupled directly to the interior surface of the pane. The electrical resistor has an electrical resistance corresponding to a temperature of the electrical resistor.

Another embodiment apparatus disclosed herein foresees the housing defining a chamber.

Another embodiment apparatus disclosed herein further includes a second sensor including a second electrically insulating pane coupled to the housing. The embodiment second sensor also inclues a second electrical resistor coupled directly to the second pane. The second electrical resistor has an electrical resistance corresponding to a temperature of the second electrical resistor, and the second pane and the housing are to isolate the second electrical resistor from the fluid. Only one of the first sensor or the second sensor is to be calibrated for fluid velocity.

**BRIEF DESCRIPTION OF THE DRAWINGS**

Embodiments of apparatus for determining fluid characteristics are described with reference to the following figures. The same numbers are used throughout the figures to reference like features and components.

FIG. 1 illustrates an example system in which embodiments of apparatus for determining fluid characteristics can be implemented.
FIG. 2 illustrates various components of an example device that can implement embodiments of the apparatus for determining fluid characteristics.
FIG. 3 is a model illustrating heat transfer through a portion of the example device of FIG. 2.
FIG. 4 is a chart that plots normalized power dissipation as a function of heat transfer coefficient.
FIG. 5 is a table that lists relative differences between a response of the example device of FIG. 2 and a response of a theoretical resistance temperature detector.
FIG. 6 illustrates various components of an example device that can implement embodiments of the apparatus for determining fluid characteristics.
FIG. 7 illustrates various components of the example device of FIG. 6 that can implement embodiments of the apparatus for determining fluid characteristics.
FIG. 8 is a chart that plots normalized power dissipation as a function of heat transfer coefficient.
FIG. 9 illustrates example method(s) for determining fluid characteristics in accordance with one or more embodiments.
FIG. 10 illustrates example method(s) for determining fluid characteristics in accordance with one or more embodiments.

**DETAILED DESCRIPTION**

Certain embodiments are shown in the above-identified figures and described in detail below. In describing these embodiments like or identical reference numbers are used to identify common or similar elements. The figures may not be to scale and certain features and certain views of the figures may be shown exaggerated in scale or in schematic for clarity and/or conciseness.

Example methods and apparatus for determining fluid characteristics are disclosed herein. Embodiment apparatus disclosed herein includes a housing including an electrically insulating pane. The pane is diamond. The pane include an exterior surface to be disposed in a fluid and an interior surface to be isolated from the fluid. In some embodiments, the pane is thermally insulated from the housing via a mount including thermal insulation. A sensor including an electrical resistor having an electrical resistance corresponding to a temperature of the electrical resistor may be coupled directly to the interior surface of the pane. In some embodiments, only the pane provides a thermal resistance between the electrical resistor and the fluid. In some examples, the housing is disposed on a downhole tool.

The example sensor may be used to determine a temperature of the fluid or heat the fluid. In some examples, the example sensor may be used to determine a fluid velocity and/or a direction of fluid flow.

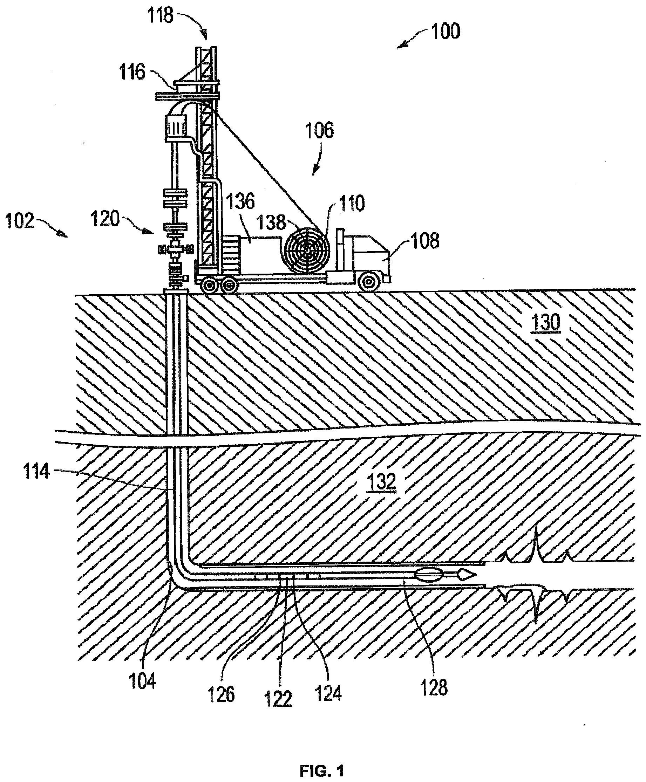

FIG. 1 is a schematic depiction of a wellsite 100 with a coiled tubing system 102 deployed into a well 104. The coiled tubing system 102 includes surface delivery equipment 106, including a coiled tubing truck 108 with reel 110, positioned adjacent the well 104 at the wellsite 100. The coiled tubing system 102 also includes coiled tubing 114 that may be used to pump a fluid into the well 104. With the coiled tubing 114 run through a conventional gooseneck injector 116 supported by a mast 118 over the well 104, the coiled tubing 114 may then be advanced into the well 104. That is, the coiled tubing 114 may be forced down through valving and pressure control equipment 120 and into the well 104.

In the coiled tubing system 102 as shown, a treatment device 122 is provided for delivering fluids downhole during a treatment application. The treatment device 122 is preferably deployable into the well 104 to carry fluids, such as an acidizing agent or other treatment fluid, and disperse the fluids through at least one injection port 124 of the treatment device 122.

The coiled tubing system 102 of FIG. 1 is depicted as having a fluid sensing system 126 positioned about the injection port 124 for determining parameters of fluids in the well 104. The fluid sensing system 126 is preferably configured to determine fluid parameters, such as fluid direction and/or velocity. Other downhole parameters may also be determined, if desired.

Continuing with reference to FIG. 1, the coiled tubing system 102 may optionally be provided with a logging tool 128 for collecting downhole data. The logging tool 128 as shown is provided near a downhole end of the coiled tubing 114. The logging tool 128 is preferably configured to acquire a variety of logging data from the well 104 and surrounding formation layers 130, 132, such as those depicted in FIG. 1. The logging tool 128 is preferably provided with a host of well profile generating equipment or implements configured for production logging directed at acquiring well fluids and formation measurements from which an overall production profile may be developed. Other logging, data acquisition, monitoring, imaging and/or other devices and/or capabilities may be provided to acquire data relative to a variety of well characteristics. Information gathered may be acquired at the surface in a high speed manner, and, where appropriate, put to immediate real-time use (e.g. via a treatment application).

With reference still to FIG. 1, the coiled tubing 114 with the treatment device 122, fluid sensing system 126 and logging tool 128 thereon is deployed downhole. As these components are deployed, treatment, sensing and/or logging applications may be directed by way of a control unit 136 at the surface. For example, the treatment device 122 may be activated to release fluid from injection port 124; the fluid sensing system 126 may be activated to collect fluid measurements; and/or the logging tool 128 may be activated to log downhole data, as desired. The treatment device 122, fluid sensing system 126 and logging tool 128 are preferably in communication with the control unit 136 via a communication link (not shown) for passing signals (e.g., power, communication, control, etc.) therebetween.

The control unit 136 is depicted as computerized equipment secured to the truck 108. However, the control unit 136 may be of a more mobile variety such as a laptop computer. Additionally, powered controlling of the application may be hydraulic, pneumatic and/or electrical. Regardless, the wireless nature of the communication allows the control unit 136 to control the operation, even in circumstances where subsequent different application assemblies may be deployed downhole.

The control unit 136 may be configured to wirelessly communicate with a transceiver hub 138 of the coiled tubing reel 110. The receiver hub 138 is configured for communication onsite (surface and/or downhole) and/or offsite as desired. Preferably, the control unit 136 communicates with the sensing system 126 and/or logging tool 128 for passing data therebetween. The control unit 136 may be provided with and/or coupled to databases, processors, and/or communicators for collecting, storing, analyzing, and/or processing data collected from the sensing system and/or logging tool.

Although the example methods and apparatus disclosed herein are discussed in conjunction with the example system 102 of FIG. 1, the example methods and apparatus disclosed herein are also applicable to other downhole tools such logging-while-drilling tools, wireline tools, and/or any other suitable downhole tool. In other examples, the example apparatus and methods disclosed herein are implemented at a fixed or mobile testing facility at the surface and/or at any other suitable location.

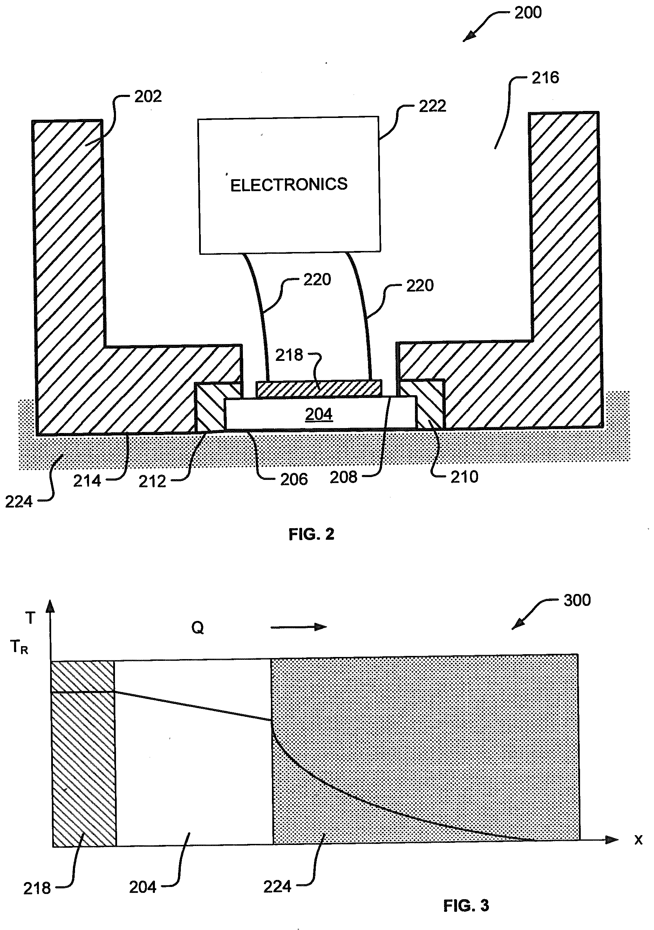

FIG. 2 is a cross-sectional view of an example sensor 200 disclosed herein, which may be used to implement the embodiment sensing system 126 of Fig. 1. The example sensor 200 of FIG. 2 may be employed as a temperature sensor and/or a heater. In the illustrated example, the sensor 200 includes a housing 202. The example housing 202 is suitable for downhole conditions such as, for example, temperatures between about negative 25°C and positive 150°C and pressures up to about 86.18 MPa (12,500 PSI). The example housing 202 includes an electrically insulating pane 204 having an exterior surface 206 and an interior surface 208. In the illustrated example, the pane 204 is a solitary crystalline structure such as, for example, diamond, aluminum oxide, silicon carbide, aluminum nitride, beryllium oxide, etc. Other example panes are other structures. In the illustrated example, the pane 204 is diamond and has a thickness or height of about 1 millimeter and a diameter of about 4 millimeters. However, the above-noted dimensions are merely examples and, thus, other dimensions may be used without departing from the scope of this disclosure.

The example pane 204 is coupled to the housing 202 via a mount 210, which thermally insulates the pane 204 from the housing 202. In the illustrated example, the mount 210 is a thermally insulating material such as, for example, polyether ether ketone (PEEK polymer). In some examples, the exterior surface 206 of the pane 204 is substantially flush or coplanar with an exterior surface 212 of the mount 210 and/or an exterior surface 214 of the housing 202.

The example housing 202 defines a chamber 216. An electrical resistor 218 is disposed inside the chamber 216 and coupled directly to the interior surface 208 of the example pane 204. In some examples, the electrical resistor 218 includes an electrically resistive material deposited or coated directly onto the interior surface 208 of the pane 204. In some examples, the electrical resistor 218 includes a wire coupled (e.g., brazed) to the interior surface 208 of the pane 204. The electrical resistor 218 has an electrical resistance depending on (e.g., that varies with) a temperature of the electrical resistor 218. In the illustrated example, the electrical resistor 218 is a platinum deposit or film. In some examples, the temperature of the electrical resistor 218 can be determined using the following equation:

$$\text{Equation 1:} \quad R = R_0\left(1 + aT + bT^2\right).$$

In Equation 1, R is the electrical resistance of the electrical resistor 218, Ro is the electrical resistance of the electrical resistor 218 at 0°C, T is the temperature of the electrical resistor 218 in degrees Celsius, $a = 3.9083 \times 10^{-3}$ °C$^{-1}$, and $b = -5.775 \times 10^{-7}$ °C$^{-2}$. In the illustrated example, leads or wires 220 are coupled between the electrical resistor 218 and electronics 222 such as, for example, a processor, an analyzer, a controller, a power source, and/or any other electronic device.

During operation, the housing 202 is at least partially immersed or disposed in a fluid 224, and the fluid 224 flows across the exterior surface 214 of the housing 202 and the exterior surface 206 of the pane 204. The housing 202 and the pane 204 isolate the electrical resistor 218 from the fluid 224 and, thus, isolate the electrical resistor 218 and the leads 220 from conditions exterior to the housing 202 (e.g., debris, corrosion, high pressures, stress caused by fluid flow, electrical conductivity of the fluid 224, etc.). However, the electrical resistor 218 is coupled directly to the interior surface 208 of the pane 204. Thus, only the pane 204 provides a thermal conductance between the electrical resistor 218 and the fluid 224.

In some examples, the electrical resistor 218 may be used to determine a temperature of the fluid 224. For example, because the resistance of the electrical resistor 218 corresponds to a temperature of the electrical resistor 218 as shown in Equation 1, the temperature of the fluid 224 may be determined based on the resistance of the electrical resistor 218. Thus, the example sensor 200 may be employed as a resistance temperature detector. As described in greater detail below, the example electrical resistor 218 may also be used to heat the fluid 224.

In some examples, a dynamic range of the example sensor 200 is a difference between a highest measurement and a lowest measurement determinable via the sensor 200.. The dynamic range of the example sensor 200 is affected by factors such as, for example, an amount of power available to the electrical resistor 218, material properties of the electrical resistor 218, a thermal conductance (i.e., an inverse of a thermal resistance) between the electrical resistor 218 and the fluid 224, and/or other factors.

FIG. 3 is a one-dimensional, steady state model 300 of heat transfer from the electrical resistor 218 to the fluid 224 via the pane 204. In the illustrated example, the electronics 222 supply power to the electrical resistor 218 to cause the electrical resistor 218 to generate heat, Q. In the illustrated example, a temperature of the electrical resistor 218, $T_R$, is greater than a temperature of the fluid 224. Thus, the heat generated by the example electrical resistor 218 is transferred to (i.e., dissipated into) the fluid 224 via the pane 204.

The example sensor 200 may be used to determine a velocity of the fluid 224 based on the heat transfer between the electrical resistor 218 and the fluid 224. The heat transfer between the electrical resistor 218 and the fluid 224 corresponds to the heat transfer between the exterior. surface 206 of the pane 204 and the fluid 224, and the heat transfer between a point on the exterior surface 206 of the pane 204 and the fluid 224 is governed by Newton's law of cooling:

Equation 2:   $q = h(T_s - T_f)$.

In Equation 2, q is a convective heat flux, $T_s$ is a temperature of the exterior surface 206 of the pane 204, and $T_f$ is a temperature of the fluid and h is a heat transfer coefficient. An amount of the heat dissipated into the fluid 224 over the entire exterior surface 206 of the pane 204 can be calculated based on the following equation:

Equation 3:   $\frac{Q}{S} = \bar{h}(T_s - T_f)$.

In some examples, the temperature of the fluid, $T_f$, is measured by a temperature sensor adjacent the example sensor 200. In some examples, the temperature of the exterior surface 206 of the pane 204 is not measured. In Equation 3, Q is the heat dissipated into the fluid 224 per unit of time (e.g., second) at the exterior surface 206 of the pane 204, S is a surface area of heat transfer (i.e., the area of the exterior surface 206 of the pane 204) and $\bar{h}$ is a mean heat transfer coefficient. The mean heat transfer coefficient, h, is a function of fluid conduit geometry, thermophysical properties of the fluid 224, the area of the exterior surface 206 of the pane 204, etc.

The velocity of the fluid 224 is monotonically related to the mean heat transfer coefficient, h. Because the temperature of the exterior surface 206 of the pane 204 is not measured via the sensor 200, the mean heat transfer coefficient may be determined via the example sensor 200 based on a normalized heat dissipation of the sensor 200. The normalized heat dissipation may be determined using Equation 4 below:

Equation 4:   $\frac{P}{(T_{\text{Electrical Resistor}} - T_f)S}$.

In Equation 4, P is a power consumption of the electrical resistor 218 and $T_{\text{electrical resistor}}$ is the temperature of the electrical resistor 218. In some examples, the electronics 228 are used to determine the power consumption of the electrical resistor 218 and the temperature of the electrical resistor 218.

The normalized heat dissipation is monotonically related to the heat transfer coefficient, which is monotonically related to the fluid velocity. Thus, the example sensor 200 may be used to determine the velocity of the fluid 224 based on the normalized heat dissipation of the sensor 200.

The heat transfer between the electrical resistor 218 and the fluid 224 and, thus, the normalized heat dissipation of the sensor 200 is affected by a thermal conductance (i.e., an inverse of a thermal resistance) between the electrical resistor 218 and the fluid 224. The thermal conductance between the example electrical resistor 218 and the fluid 224 may be determined using the example model 300 of FIG. 3 and the following equations:

Equation 5:   $\text{Thermal Conductance} = \frac{P}{(T_{\text{Electrical Resistor}} - T_{\text{fluid}})} = \frac{1}{(R_{\text{Sensor}} + R_{\text{fluid}}(v))}$;

and

Equation 6:   $R_{\text{fluid}}(v) = \frac{1}{\bar{h}S}$.

$R_{\text{Sensor}}$ is a thermal resistance between the electrical resistor 218 and the fluid 224. Because the electrical resistor 218 is coupled directly to the pane 204, only the pane 204 provides a thermal conductance between the electrical resistor 218 and the fluid 224. $R_{\text{fluid}}(v)$ is a thermal resistance of the fluid 224, which is a function of characteristics of the fluid 224 such as, for example a velocity of the fluid 224, fluid type, fluid composition, etc. In the illustrated example, the pane 204 is diamond, which has a thermal conductivity, k, of $1000 \frac{W}{K \cdot m}$, and the fluid 224 is water.

As shown by the following equation, the normalized power dissipation is a function of the thermal conductance between the electrical resistor 218 and the fluid 224.

$$\text{Equation 7:} \quad \frac{P}{(T_{\text{Electrical Resistor}}-T_{\text{fluid}})S} = \frac{\frac{1}{SR_{\text{sensor}}}}{1+\frac{1}{h}\frac{1}{SR_{\text{sensor}}}}.$$

Thus, an upper limit of the normalized power dissipation of the example sensor 200 can be determined using the following equation:

$$\text{Equation 8:} \quad \lim_{h\to\infty}\left(\frac{P}{(T_{\text{Electrical Resistor}}-T_{\text{fluid}})S}\right) = \frac{1}{SR_{\text{sensor}}} = \frac{k_{\text{pane}}}{T_{\text{pane}}}.$$

In equation 8, $k_{\text{pane}}$ is a thermal conductivity of the pane 204, and $T_{\text{pane}}$ is a thickness of the pane 204. In the illustrated example, the pane 204 is diamond and has thickness about 1 mm. As a result, the upper limit of the normalized power dissipation of the example sensor 200 is about $1{,}000{,}000\ \frac{W}{m^2{}^{\circ}C}$. Other examples have other upper limits.

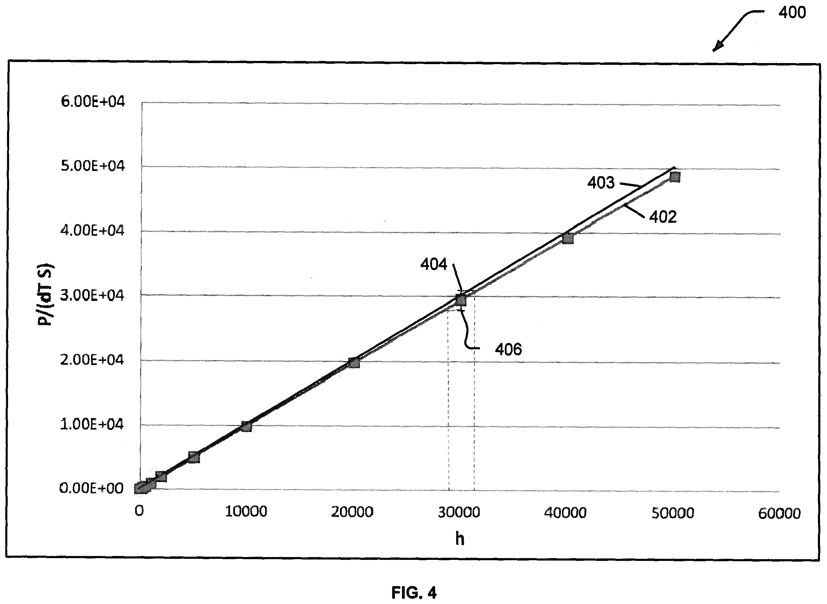

FIG. 4 is a chart 400 illustrating a response 402 of the example sensor 200 of FIG. 2 and a response 403 of a theoretical resistance temperature detector (RTD) (i.e., a mathematical model assuming no thermal resistance between an electrical resistor and the fluid 224). In the illustrated example, the normalized power dissipation of the example sensor 200 is plotted as a function of the heat transfer coefficient from a heat transfer coefficient of about zero $\frac{W}{m^2{}^{\circ}C}$ to a heat transfer coefficient of about $50{,}000\ \frac{W}{m^2{}^{\circ}C}$. In the illustrated example, only the pane 204 of the example sensor 200 provides a thermal conductance between the electrical resistor 218 and the fluid 224. As a result, the upper limit of the normalized power dissipation of the example sensor 200 is about $1{,}000{,}000\ \frac{W}{m^2{}^{\circ}C}$. The theoretical RTD has no thermal resistance between the electrical resistor of the theoretical RTD and the fluid 224. Thus, the normalized power dissipation of the theoretical RTD is equal to the heat transfer coefficient as shown by the response 403.

The dynamic range of the example sensor 200 includes heat transfer coefficients corresponding to the normalized power dissipation of about zero $\frac{W}{m^2{}^{\circ}C}$ to the normalized power dissipation of about the upper limit of the normalized power dissipation of the sensor 200 (e.g., $1{,}000{,}000\ \frac{W}{m^2{}^{\circ}C}$.). Thus, although the example chart 400 plots the response 402 of the example sensor 200 from the heat transfer coefficient of about zero $\frac{W}{m^2{}^{\circ}C}$ to the heat transfer coefficient of about $50{,}000\ \frac{W}{m^2{}^{\circ}C}$, the dynamic range of the example sensor 200 includes heat transfer coefficients exceeding $50{,}000\ \frac{W}{m^2{}^{\circ}C}$.

In some examples, a sensitivity of the example sensor 200 corresponds to a change of the response 402 of the example sensor 200 for a given change in the heat transfer coefficient. Thus, in the illustrated example, the sensitivity of the example sensor 200 corresponds to a slope of the response 402.

In the illustrated example, the electronics 222 determine a value of the heat transfer coefficient based on the normalized power dissipation. However, based on characteristics of the electronics 222 (e.g., quality calibration, etc.), the value of the normalized power dissipation determined by the electronics 222 includes a first error. As a result, the value of the corresponding heat transfer coefficient includes a second error. The greater the sensitivity of the example sensor 200 (i.e., the greater the slope of the example response 402), the smaller the second error.

In the illustrated example, bars 404 and 406 correspond to the first error at a given heat transfer coefficient (e.g., $30{,}000\ \frac{W}{m^2{}^{\circ}C}$). In the illustrated example, the first error is a variance of about 5 percent (i.e., $\pm$ 5 percent) of the value of the normalized power dissipation. For example, if an actual value of the normalized power dissipation is $29{,}120\ \frac{W}{m^2{}^{\circ}C}$ and an actual value of the heat transfer coefficient is 30,000, the value of the normalized power dissipation determined by the electronics 222 may be from about $27,700 \frac{W}{m^2{}^\circ C}$ to about $30,600 \frac{W}{m^2{}^\circ C}$. As a result, the value of the heat transfer coefficient determined by the electronics 222 may be from about $28,800 \frac{W}{m^2{}^\circ C}$ to about $31,800 \frac{W}{m^2{}^\circ C}$. Thus, the first error causes the second error to be a variance of about 6.04 percent of the actual value of the heat transfer coefficient. Other examples have other errors (e.g., variances of 1 percent, 2 percent, etc.).

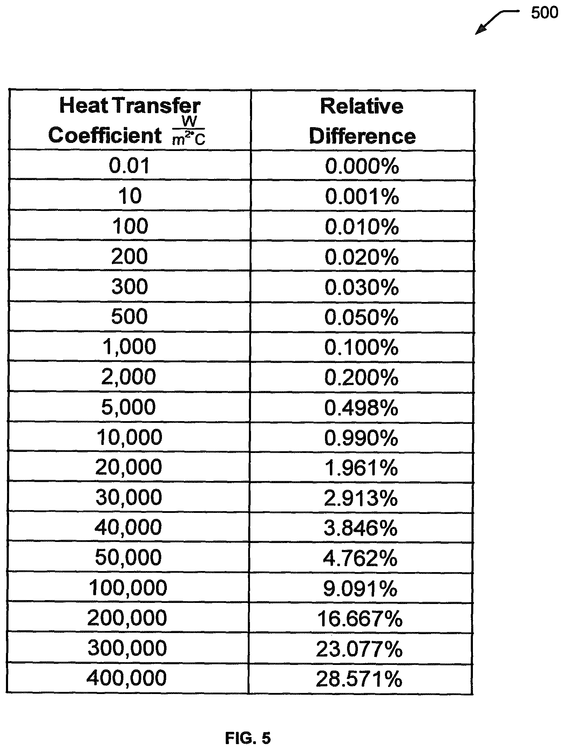

FIG. 5 is a table of example relative differences between the response 402 of the example sensor 200 and the response 403 of the theoretical RTD. In the illustrated example, a relative difference between the response 402 of the example sensor 200 and the response 403 of the theoretical RTD (i.e., at a given heat transfer coefficient, a difference between the response 402 of the example sensor 200 and the response 403 of the theoretical RTD divided by the response 402 of the example sensor) is about 0.1 percent at the heat transfer coefficient of 1000, about 0.99 percent at the heat transfer coefficient of 10,000, about 9.091 percent at the heat transfer coefficient of 100,000, etc.

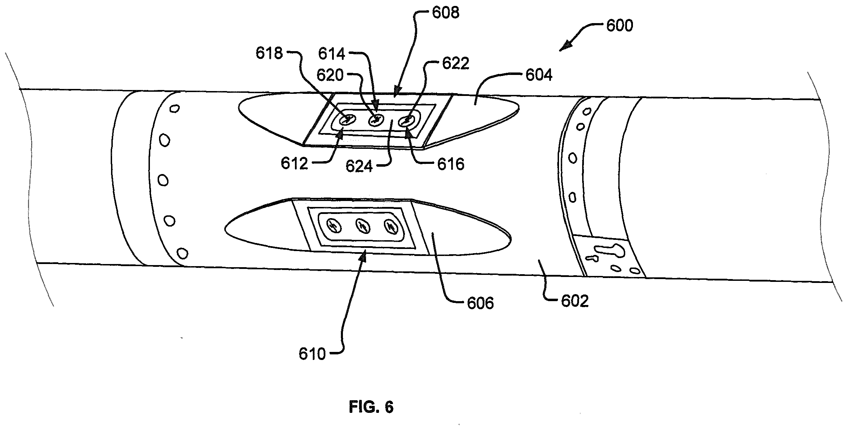

FIG. 6 illustrates an example module 600, which may be used to implement the coiled tubing system 102 of FIG. 1. The example module 600 includes a collar or housing 602 defining a first recess 604 and a second recess 606. In the illustrated example, a first calorimetric sensor 608 and a second calorimetric sensor 610 are disposed in the first recess 604 and the second recess 606, respectively, to shield or protect the first calorimetric sensor 608 and/or the second calorimetric sensor 610 from debris moving along the module 600, contact with walls of a borehole, damage while the module 600 is being deployed or brought to the surface, etc. The first calorimetric sensor 608 is substantially identical to the second calorimetric sensor 610. Therefore, a description of the first calorimetric sensor 608 is applicable to the second calorimetric sensor 610 and, to avoid redundancy, the second calorimetric sensor 610 is not separately described.

In the illustrated example, the first calorimetric sensor 608 includes a first resistance temperature detector (RTD) 612, a second RTD 614, and a third RTD 616. In the illustrated example, the first RTD 612, the second RTD 614 and the third RTD 616 of the first calorimetric sensor 608 are positioned in a row. In the illustrated example, the second RTD 614 is disposed between the first RTD 612 and the third RTD 616.

Each of the first RTD 612, the second RTD 614 and the third RTD 616 of FIG. 6 includes an electrically insulating pane 618, 620 and 622. The example panes 618, 620 and 622 each have a diameter of about 4 millimeters. A center of the pane 618 of the first RTD 612 is spaced a distance of about 1 centimeter from a center of the pane 620 of the second RTD 614, and the center of the pane 620 of the second RTD 614 is spaced a distance of about 1 centimeter from a center of the pane 622 of the third RTD 616. The above noted dimensions are merely examples and, thus, other dimensions may be used without departing from the scope of this disclosure. In the illustrated example, the panes 618, 620 and 622 are diamond. However, other example panes are other electrically insulating materials such as, for example, aluminum oxide, silicon carbide, aluminum nitride, beryllium oxide, etc. In some examples, the panes 618, 620 and 622 are the same material. In other examples, the panes 618, 620 and 622 have different materials. In some examples, one or more of the panes 618, 620 and 622 is a solitary crystalline structure.

The example panes 618, 620 and 622 are coupled to the housing 602 via a mount 624. The example mount 624 surrounds the panes 618, 620 and 622 and thermally insulates the panes 618, 620 and 622 from the housing 602. In the illustrated example, the mount 624 is a thermally insulating material such as, for example, polyether ether ketone (PEEK polymer).

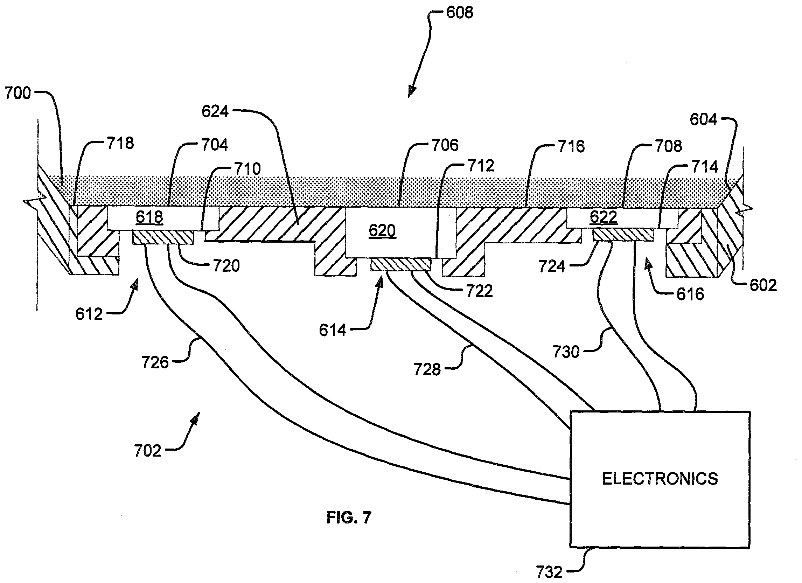

FIG. 7 is a cross sectional view of the example module 600 of FIG. 6 immersed in a fluid 700. In the illustrated example, the housing 602 defines a chamber 702. Each of the example panes 618, 620 and 622 includes an exterior surface 704, 706 and 708 and an interior surface 710, 712 and 714. The exterior surfaces 704, 706 and 708 of the panes 618, 620 and 622 are substantially flush and/or coplanar with an exterior surface 716 of the mount 624 and/or an exterior surface 718 of the housing 602. When the example module 600 is disposed in a borehole, the fluid 700 flows along the exterior surface 718 of the housing 602 and the exterior surfaces 704, 706 and 708 of the panes 618, 620 and 622. In some examples, the panes 618, 620 and 622 have different thicknesses. In the illustrated example, the pane 618 of the first RTD 612 has a thickness of about 1 millimeter, the pane 620 of the second RTD 614 has a thickness of about 1.5 millimeters, and the pane 622 of the third RTD 616 has a thickness of about 1 millimeter. Other example panes are other thicknesses.

In the illustrated example, each of the first RTD 612, the second RTD 614 and the third RTD 616 includes an electrical resistor 720, 722 and 724 disposed inside the chamber 702 and coupled directly to one of the interior surfaces 710, 712 and 714 of the panes 618, 620 and 622. The housing 602 and the panes 618, 620 and 622 isolate the electrical resistors 720, 722 and 724 from the fluid 700. In some examples, one or more of the electrical resistors 720, 722 and 724 includes an electrically resistive coating or deposit. In some examples, the electrical resistors 720, 722 and 724 are platinum.

In the illustrated example, the electrical resistors 720, 722 and 724 each have an electrical resistance corresponding to its temperature and only the panes 618, 620 and 622 provide a thermal conductance between the electrical resistors 720, 722 and 724 and the fluid 700. Thus, heat transfer from each of the electrical resistors 720, 722 and 724 to the fluid 700 can be modeled using the example model 300 of FIG. 3. Each of the example electrical resistors 720, 722 and 724 includes leads or wires 726, 728 and 730 coupled to electronics 732 such as, for example, a processor, an analyzer, a controller, a power source, and/or any other electronic device(s).

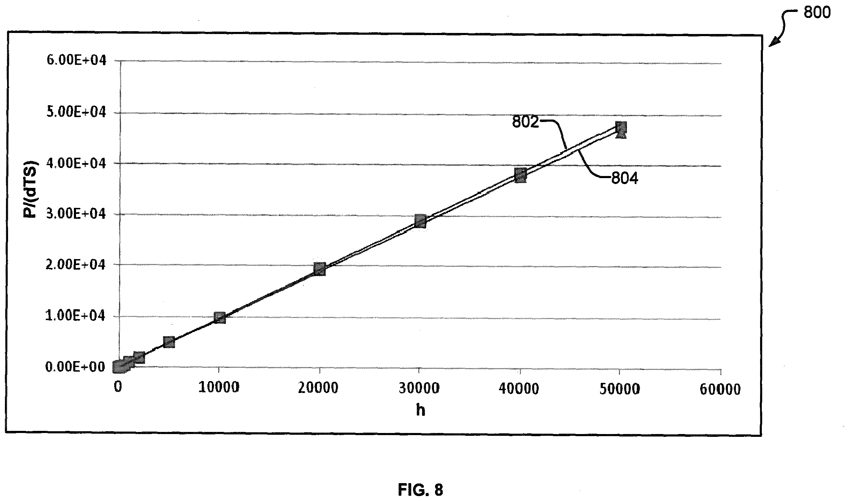

FIG. 8 is a chart 800 illustrating a response of the first RTD 612, a response of the second RTD 614, and a response of the third RTD 616. In the example chart 800 of FIG. 8, the normalized power dissipation of the example first RTD 612, the example second RTD 614, and the example third RTD 616 are plotted as a function of the heat transfer coefficient from a heat transfer coefficient of about $zero \frac{W}{m^2{}^\circ C}$ to a heat transfer coefficient of about $50,000 \frac{W}{m^2{}^\circ C}$.

In the illustrated example, the first RTD 612 and the third RTD 616 are substantially identical. As a result, the response of the first RTD 612 is substantially the same as the response of the third RTD 616. Thus, in the illustrated example, both the response of the first RTD 612 and the response of the third RTD 616 are shown by first line 802. The response of the example second RTD 614 is shown by second line 804.

The dynamic ranges of the example first RTDs 612 and the example third RTD 616 include heat transfer coefficients corresponding to the normalized power dissipation of about $zero \frac{W}{m^2{}^\circ C}$ to about the upper limit of the normalized power dissipation of the example first RTD 612 and the example third RTD 616, respectively. For example, the upper limit of the normalized power dissipation of the example first RTD 612 and the example third RTD 616, which have panes 618 and 622 having thicknesses of about 1 millimeter, are about $1,000,000 \frac{W}{m^2{}^\circ C}$.

The dynamic range of the example second RTD 614 includes heat exchange coefficients from the normalized power dissipation of about $zero \frac{W}{m^2{}^\circ C}$ to about the upper limit of the normalized power dissipation of the example second RTD 614. The upper limit of the normalized power dissipation of the example second RTD 614, which has a pane 620 having a thickness of about 1.5 millimeters, is about $667,000 \frac{W}{m^2{}^\circ C}$. Thus, although the example chart 800 of FIG. 8 plots the normalized power dissipation of each the example RTDs 612, 614 and 616 as a function of the heat transfer coefficient from about $zero \frac{W}{m^2{}^\circ C}$ to the heat transfer coefficient of about $50,000 \frac{W}{m^2{}^\circ C}$, the dynamic ranges of the example RTDs 612, 614 and 616 include heat transfer coefficients of about $zero \frac{W}{m^2{}^\circ C}$ to a heat transfer coefficient in excess of $50,000 \frac{W}{m^2{}^\circ C}$.

In the illustrated example, the first RTD 612, the second RTD 614, and the third RTD 616 are interchangeable. In some examples, interchangeability of two of the example RTDs 612, 614 and 616 is based on a difference between the normalized power dissipation of the one of the RTDs 612, 614 and 616 and another one of the RTDs 612, 614 and 616 for a given heat transfer coefficient. As illustrated by the first line 802 of FIG. 8, the response of the example first RTD 612 and the response of example third RTD 616 are substantially the same. Thus, the difference between the normalized power dissipation of the first RTD 612 and the normalized power dissipation of the third RTD 616 for any heat transfer coefficient is about zero. Therefore, the first RTD 612 and the third RTD 616 are interchangeable. As a result, if the example first RTD 612 is calibrated for fluid velocity based on a type of fluid in which the housing 602 of the example module 600 is to be immersed (e.g., by comparing the response of the first RTD 612 to a response of a previously calibrated sensor, by comparing the response of the first RTD 612 to a response of a model (i.e., theoretical) RTD, etc.), the third RTD 616 may be used in place of the first RTD 612 without calibrating the third RTD 616 for fluid velocity, electrical power versus fluid velocity, and/or any other parameter.

In the illustrated example, the second RTD 614 is substantially interchangeable with one of the first RTD 612 and the third RTD 616. Over a portion of the dynamic range of the first RTD 612 and a portion the dynamic range of the second RTD 614, a difference between the normalized power dissipation of the first RTD 612 and the normalized power dissipation of the second RTD 614 for a given heat transfer coefficient may be greater than zero because the thickness of the pane 618 of the first RTD 612 is different than the thickness of the pane 620 of the second RTD 614. However, the first RTD 612 and the second RTD 614 are interchangeable for a range of heat transfer coefficients corresponding to a suitable relative difference between the response of the first RTD 612 and the response of the second RTD 614.

In the illustrated example, the relative difference between the normalized power dissipation of the first RTD 612 and the normalized power dissipation of the second RTD 614 (i.e., at a given heat transfer coefficient, the difference between the normalized power dissipation of the first RTD 612 and the normalized power dissipation of the second RTD 614 divided by the normalized power of the first RTD 612) is less than or equal to about 2.33 percent from the heat transfer coefficient of about $zero \frac{W}{m^2 {}^\circ C}$ to the heat transfer coefficient of about $50,000 \frac{W}{m^2 {}^\circ C}$. Thus, if the suitable difference between the response of the first RTD 612 and the response of the second RTD 614 is 2.33 percent or greater, the example first RTD 612 is interchangeable with the second RTD 614 from the heat transfer coefficient of about $zero \frac{W}{m^2 {}^\circ C}$ to the heat transfer coefficient of about $50,000 \frac{W}{m^2 {}^\circ C}$. Other suitable relative differences may be used or selected in other examples.

In some examples, the example first calorimetric sensor 608 is used to determine a velocity and/or a flow rate of the fluid 700. For example, during operation, the example first RTD 612 and/or the example third RTD 616 determine a temperature of the fluid 700, and the example second RTD 614 heats the fluid 700. In the illustrated example, the electrical resistor 722 of the second RTD 614 is provided with a substantially constant amount of power to enable the temperature of the electrical resistor 722 to vary based on the heat transfer between the electrical resistor 722 and the fluid 700. Based on the temperature of the electrical resistor 722 of the second RTD 614 and the temperature of the fluid 700 as determined by the first RTD 612 and/or the third RTD 616, the velocity and/or the flow rate of the fluid 700 may be determined. In other examples, the power supplied to the electrical resistor 722 of the second RTD 614 is controlled by the electronics 732 such that a temperature of the second RTD 614 is maintained above the temperature of the fluid 700 by a given amount. In some such examples, the velocity of the fluid 700 is determined based on the power dissipated by the electrical resistor 722 of the second RTD 614, the temperature of the electrical resistor 722 of the second RTD 614, and the temperature of the fluid 700 as determined by the first RTD 612 and/or the third RTD 616.

In some examples, the first calorimetric sensor 608 is used to determine a direction of flow of the fluid 700. In some examples, during operation, the second RTD 614 heats the fluid 700, and the first RTD 612 and the third RTD 616 each determine the temperature of the fluid 700. Based on a difference between the temperature of the fluid 700 determined by the first RTD 612 and the temperature of the fluid 700 determined by the third RTD 616, the direction of the fluid 700 is determined. For example, if the temperature determined by the first RTD 612 is higher than the temperature determined by the third RTD 616, then the first RTD 612 is downstream of the third RTD 616.

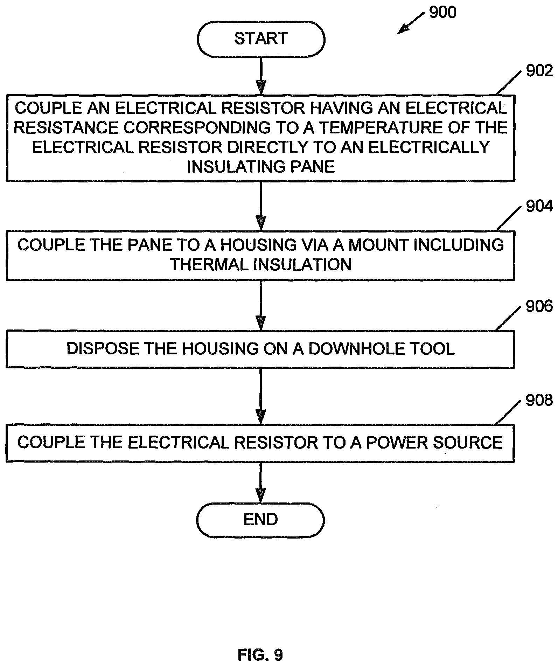

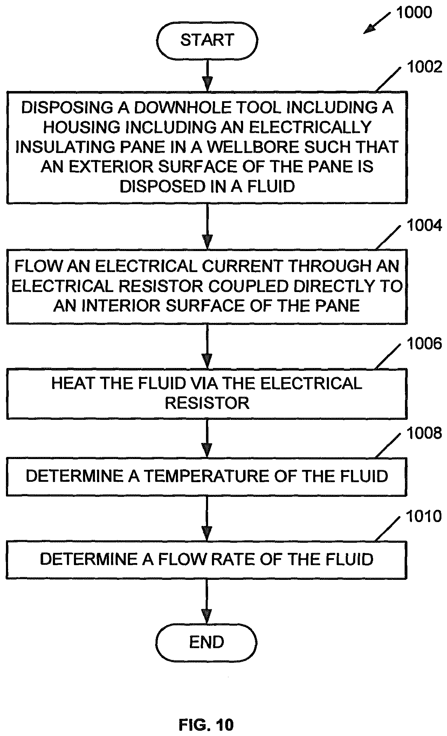

FIGS. 9 and 10 are flowcharts representative of example methods disclosed herein. One or more of the example methods of FIGS. 9 and 10 may be carried out by a processor, the example electronics 222 of FIG. 2, the example electronics 732 of FIG. 7 and/or any other suitable processing device. In some examples, one or more of the example methods of FIGS. 9 and 10 are embodied in coded instructions stored on a tangible machine accessible or readable medium such as a flash memory, a ROM and/or random-access memory RAM associated with a processor. One or more of the example methods of FIGS. 9 and 10 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, one or more of the operations depicted in FIGS. 9 and 10 may be implemented manually or as any combination of any of the foregoing techniques, for example, any combination of firmware, software, discrete logic and/or hardware. Further, although the example methods are described in reference to the flowcharts illustrated in FIGS. 9 and 10, many other methods of implementing the example methods may be employed. For example, the order of execution of the blocks may be changed, and/or some of the blocks described may be changed, removed, sub-divided, or combined. Additionally one or more of the example methods of FIGS. 9 and 10 may be carried out sequentially and/or carried out in parallel by, for example, separate processing threads, processors, devices, discrete logic, circuits, etc.

FIG. 9 is a flowchart representative of an example method 900 of manufacturing an example apparatus such as, for example, one of the example RTDs 612, 614 and 616 disclosed above. With reference to FIGS. 1-8, the example method of FIG. 9 includes coupling an electrical resistor (e.g., the electrical resistor 720 of the first RTD 612 of FIG. 7) having an electrical resistance corresponding to a temperature of the electrical resistor directly to an electrically insulating pane (e.g., the example pane 618 the first RTD 612 of FIG. 7) (block 902). In some examples, the pane is a solitary crystalline structure such as, for example, diamond.

At block 904, the pane is coupled to a housing such as, for example, the housing 602 of the example module 600 of FIG. 6 via a mount including thermal insulation (e.g., the example mount 624 of FIG. 6). In some examples, the mount is a thermally insulating material such as, for example, PEEK polymer. At block 906, the housing is disposed on a downhole tool. For example, the housing may be disposed on a downhole tool such as, for example, the coiled tubing system 102 of FIG. 1. At block 908, the electrical resistor is coupled to a power source such as, for example, the example electronics of FIG. 7, and/or any other suitable power source. In some examples, when the downhole tool is deployed in a wellbore, the housing and the pane isolate the electrical resistor from fluid in the wellbore, and only the pane provides a thermal resistance between the electrical resistor and the fluid.

FIG. 10 is a flowchart representative of another example method 1000 disclosed herein. With reference to FIGS. 1-8, the example method 1000 begins by disposing a downhole tool (e.g., the example coiled tubing system 102 of FIG. 1) including a housing including an electrically insulating pane (e.g., the example housing 602 of FIG. 6) in a wellbore such that an exterior surface of the pane is disposed in a fluid (block 1002). For example, the example module 600 of FIG. 6 including the first calorimetric sensor 608 may be immersed in the fluid such that one or more of the exterior surfaces 704, 706 and 708 of the panes 618, 620 and 622 are disposed in the fluid. In some examples, the pane is a solitary crystalline structure such as, for example, diamond. The pane may be thermally insulated from the housing via a thermally insulating mount such as, for example, the mount 624 of FIG. 6.

At block 1004, an electrical current is flowed through an electrical resistor (e.g., the electrical resistor 722 of the example second RTD 614 of FIG. 7) coupled directly to an interior surface of the pane. The electrical resistor is isolated from the fluid via the housing and has an electrical resistance corresponding to a temperature of the electrical resistor. At block 1006, the fluid is heated via the electrical resistor. For example, the example electronics 732 of FIG. 7 may provide power to the electrical resistor 722 of the example second RTD 614 to cause the temperature of the electrical resistor 722 to be greater than a temperature of the fluid, thereby transferring heat from the electrical resistor 722 to the fluid via the pane 620. In some examples, only the pane provides a thermal resistance between the electrical resistor and the fluid. In some examples, the electrical resistor may be provided with a substantially constant amount of power. In other examples, the electrical resistor is maintained at a temperature above the temperature of the fluid by a given amount.

At block 1008, a temperature of the fluid is determined. For example, the first RTD 612 may be used to determine the temperature of the fluid based on the resistance of the electrical resistor 720. At block 1010, a flow rate of the fluid is determined. For example, the flow rate of the fluid may be determined based on the normalized power dissipation of the sensor.

## Claims

1. An apparatus for determining fluid characteristics in downhole fluids, comprising:

   a housing including an electrically insulating pane thermally insulated from the housing, the pane having an exterior surface to be disposed in a fluid and an interior surface to be isolated from the fluid, the pane comprising diamond ; and
   a sensor including an electrical resistor coupled directly to the interior surface of the pane, the electrical resistor having an electrical resistance depending on a temperature of the electrical resistor.

2. The apparatus of claim 1 wherein the electrical resistor is to be used to determine a temperature of the fluid.

3. The apparatus of claim 1 wherein the pane is thermally insulated from the housing via a mount comprising thermal insulation.

4. The apparatus of claim 1, wherein
   the housing defines a chamber, the electrical resistor is disposed in the chamber and wherein the housing is to isolate the electrical resistor from a fluid and only the pane is to provide a thermal conductance between the electrical resistor and the fluid.

5. The apparatus of claim 1, wherein the electrical resistor is to be used to determine the velocity of a fluid.

6. The apparatus of claim 1, further comprising:

   a second electrically insulating pane; and
   a second sensor comprising a second electrical resistor coupled directly to the second pane, the second electrical resistor having an electrical resistance corresponding to a temperature of the second electrical resistor, wherein the second pane and the housing are to isolate the second electrical resistor from the fluid,

   wherein only one of the first sensor or the second sensor is to be calibrated for fluid velocity and wherein the first and second panes comprise diamond.

7. The apparatus of claim 6 wherein only the first pane provides a thermal conductance between the first electrical resistor and the fluid and wherein only the second pane provides a thermal conductance between the second electrical resistor and the fluid.

**8.** The apparatus of claim 6 wherein the first sensor and the second sensor are interchangeable.

**9.** The apparatus of claim 6 wherein the first pane has a different thickness than the second pane.

**10.** A downhole tool, comprising the apparatus of any of claims 1 to 9.

**11.** The downhole tool of claim 10, comprising a coiled tubing system.


**Patentansprüche**

**1.** Vorrichtung zur Bestimmung von Flüssigkeitseigenschaften in Bohrflüssigkeiten, umfassend:

ein Gehäuse mit einer elektrisch isolierenden Scheibe, die von dem Gehäuse thermisch isoliert ist, wobei die Scheibe eine Außenfläche aufweist, die in einer Flüssigkeit angeordnet ist, und eine Innenfläche, die von der Flüssigkeit isoliert ist, wobei die Scheibe Diamant umfasst; und
einen Sensor mit einem elektrischen Widerstandselement, das direkt an die Innenfläche der Scheibe gekoppelt ist, wobei das elektrische Widerstandselement einen elektrischen Widerstand in Abhängigkeit einer Temperatur des elektrischen Widerstandselements aufweist.

**2.** Vorrichtung nach Anspruch 1, wobei das elektrische Widerstandselement verwendet wird, um eine Temperatur der Flüssigkeit zu bestimmen.

**3.** Vorrichtung nach Anspruch 1, wobei die Scheibe von dem Gehäuse über eine Halterung mit thermischer Isolierung thermisch isoliert ist.

**4.** Vorrichtung nach Anspruch 1, wobei
das Gehäuse eine Kammer definiert, wobei das elektrische Widerstandselement in der Kammer angeordnet ist und wobei das Gehäuse das elektrische Widerstandselement von einer Flüssigkeit isoliert und nur die Scheibe Wärmeleitfähigkeit zwischen dem elektrischen Widerstandselement und der Flüssigkeit bereitstellt.

**5.** Vorrichtung nach Anspruch 1, wobei das elektrische Widerstandselement verwendet wird, um die Geschwindigkeit einer Flüssigkeit zu bestimmen.

**6.** Vorrichtung nach Anspruch 1, ferner umfassend:

eine zweite elektrisch isolierende Scheibe; und
einen zweiten Sensor, ein zweites elektrisches Widerstandselement umfassend, das direkt mit der zweiten Scheibe gekoppelt ist, wobei das zweite elektrische Widerstandselement einen elektrischen Widerstand entsprechend einer Temperatur des zweiten elektrischen Widerstandselements aufweist, wobei die zweite Scheibe und das Gehäuse das zweite elektrische Widerstandselement von der Flüssigkeit isolieren,

wobei nur der erste Sensor oder der zweite Sensor für Flüssigkeitsgeschwindigkeit kalibriert ist und wobei die erste und zweite Scheibe Diamant umfassen.

**7.** Vorrichtung nach Anspruch 6, wobei nur die erste Scheibe eine Wärmeleitfähigkeit zwischen dem ersten elektrischen Widerstandselement und der Flüssigkeit bereitstellt und wobei nur die zweite Scheibe eine Wärmeleitfähigkeit zwischen dem zweiten elektrischen Widerstandselement und der Flüssigkeit bereitstellt.

**8.** Vorrichtung nach Anspruch 6, wobei der erste Sensor und der zweite Sensor untereinander austauschbar sind.

**9.** Vorrichtung nach Anspruch 6, wobei die erste Scheibe eine andere Stärke aufweist als die zweite Scheibe.

**10.** Bohrwerkzeug, umfassend die Vorrichtung nach einem der Ansprüche 1 bis 9.

**11.** Bohrwerkzeug nach Anspruch 10, umfassend ein Rohrwendelsystem.

**Revendications**

1. Appareil destiné à déterminer des caractéristiques de fluide dans des fluides en fond de trou, comprenant :

   un logement comprenant un vitrage électriquement isolant isolé du logement, le vitrage ayant une surface extérieure à disposer dans un fluide et une surface intérieure à isoler du fluide, le vitrage comprenant du diamant ; et
   un capteur comprenant une résistance électrique couplée directement à la surface intérieure du vitrage, la résistance électrique ayant une résistance électrique dépendant d'une température de la résistance électrique.

2. Appareil selon la revendication 1, dans lequel la résistance électrique doit être utilisée pour déterminer une température du fluide.

3. Appareil selon la revendication 1, dans lequel le vitrage est isolé thermiquement du logement via une monture comprenant une isolation thermique.

4. Appareil selon la revendication 1, dans lequel
   le logement définit une chambre, la résistance électrique est disposée dans la chambre et dans lequel le logement doit isoler la résistance électrique d'un fluide et seul le vitrage doit assurer une conduction thermique entre la résistance électrique et le fluide.

5. Appareil selon la revendication 1, dans lequel la résistance électrique doit être utilisée pour déterminer la vélocité d'un fluide.

6. Appareil selon la revendication 1, comprenant en outre :

   un deuxième vitrage électriquement isolant ; et
   un deuxième capteur comprenant une deuxième résistance électrique couplée directement au deuxième vitrage, la deuxième résistance électrique ayant une résistance électrique correspondant à une température de la deuxième résistance électrique, dans lequel le deuxième vitrage et le logement doivent isoler la deuxième résistance électrique du fluide,

   dans lequel seul l'un du premier capteur et du deuxième capteur doit être étalonné pour une vélocité de fluide et dans lequel les premier et deuxième vitrages comprennent du diamant.

7. Appareil selon la revendication 6, dans lequel seul le premier vitrage assure une conduction thermique entre la première résistance électrique et le fluide et dans lequel seul le deuxième vitrage assure une conductance thermique entre la deuxième résistance électrique et le fluide.

8. Appareil selon la revendication 6, dans lequel le premier capteur et le deuxième capteur sont interchangeables.

9. Appareil selon la revendication 6, dans lequel le premier vitrage a une épaisseur différente du deuxième vitrage.

10. Outil de fond de trou, comprenant l'appareil selon l'une quelconque des revendications 1 à 9.

11. Outil de fond de trou selon la revendication 10, comprenant un système à tube spiralé.

**FIG. 1**

**FIG. 2**

**FIG. 3**

EP 2 700 923 B1

FIG. 4

500

| Heat Transfer Coefficient $\frac{W}{m^2 C}$ | Relative Difference |
|---|---|
| 0.01 | 0.000% |
| 10 | 0.001% |
| 100 | 0.010% |
| 200 | 0.020% |
| 300 | 0.030% |
| 500 | 0.050% |
| 1,000 | 0.100% |
| 2,000 | 0.200% |
| 5,000 | 0.498% |
| 10,000 | 0.990% |
| 20,000 | 1.961% |
| 30,000 | 2.913% |
| 40,000 | 3.846% |
| 50,000 | 4.762% |
| 100,000 | 9.091% |
| 200,000 | 16.667% |
| 300,000 | 23.077% |
| 400,000 | 28.571% |

FIG. 5

FIG. 6

FIG. 7

ELECTRONICS

FIG. 8

START

COUPLE AN ELECTRICAL RESISTOR HAVING AN ELECTRICAL RESISTANCE CORRESPONDING TO A TEMPERATURE OF THE ELECTRICAL RESISTOR DIRECTLY TO AN ELECTRICALLY INSULATING PANE
902

COUPLE THE PANE TO A HOUSING VIA A MOUNT INCLUDING THERMAL INSULATION
904

DISPOSE THE HOUSING ON A DOWNHOLE TOOL
906

COUPLE THE ELECTRICAL RESISTOR TO A POWER SOURCE
908

END

900

**FIG. 9**

1000

START

1002

DISPOSING A DOWNHOLE TOOL INCLUDING A HOUSING INCLUDING AN ELECTRICALLY INSULATING PANE IN A WELLBORE SUCH THAT AN EXTERIOR SURFACE OF THE PANE IS DISPOSED IN A FLUID

1004

FLOW AN ELECTRICAL CURRENT THROUGH AN ELECTRICAL RESISTOR COUPLED DIRECTLY TO AN INTERIOR SURFACE OF THE PANE

1006

HEAT THE FLUID VIA THE ELECTRICAL RESISTOR

1008

DETERMINE A TEMPERATURE OF THE FLUID

1010

DETERMINE A FLOW RATE OF THE FLUID

END

**FIG. 10**

**EP 2 700 923 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010003967 B3
- US 4265117 A
- FR 2724727